(19) **Europäisches Patentamt / European Patent Office / Office européen des brevets**

(11) **EP 1 892 170 B1**

(12) **FASCICULE DE BREVET EUROPEEN**

(45) Date de publication et mention
de la délivrance du brevet:
**08.10.2008 Bulletin 2008/41**

(51) Int Cl.:
***B61L 3/00*** *(2006.01)*   ***B61L 27/04*** *(2006.01)*
***G05B 13/02*** *(2006.01)*

(21) Numéro de dépôt: **07291017.7**

(22) Date de dépôt: **16.08.2007**

(54) **Dispositif de commande régulée de véhicule à précision recentrée**

Vorrichtung für eine geregelte Fahrzeugsteuerung mit rezentrierter Präzision

Regulated control device for a vehicle with precision refocusing

(84) Etats contractants désignés:
**AT BE BG CH CY CZ DE DK EE ES FI FR GB GR
HU IE IS IT LI LT LU LV MC MT NL PL PT RO SE
SI SK TR**

(30) Priorité: **25.08.2006 FR 0607537**

(43) Date de publication de la demande:
**27.02.2008 Bulletin 2008/09**

(73) Titulaire: **ALSTOM Transport SA
92300 Levallois-Perret (FR)**

(72) Inventeurs:
• **Demaya, Bernard
94300 Vincennes (FR)**
• **Foreau, Jérôme
78160 MARLY LE ROI (FR)**

(74) Mandataire: **Blot, Philippe Robert Emile et al
Cabinet Lavoix
2, place d'Estienne d'Orves
75441 Paris Cedex 09 (FR)**

(56) Documents cités:
**EP-A- 0 709 272        EP-A- 1 577 188
EP-A1- 0 375 553        US-A- 5 583 769**

**Description**

La présente invention concerne un dispositif de commande d'arrêt de précision destiné à un train avec pilotage automatique.

Il est bien connu que les trains, en particulier les métros, sont dotés de systèmes de pilotage automatiques assurant la conduite sécurisée des véhicules entre des stations et assurant l'arrêt précis du train à chaque station.

Lorsque les quais des stations sont équipés de portes palières, les portes du train doivent être alignées avec les portes du quai car il en résulte autrement une perturbation pour l'exploitation des trains automatiques, particulièrement les métros sans conducteur.

Si le freinage du train est réglé trop intensément, le train présente un caractère sur-freineur qui entraîne que le centre des portes du train se trouve décalé en amont des portes palières correspondantes.

Si à l'inverse le freinage du train est réglé trop mou, le train présente un caractère sous-freineur qui entraîne que le centre des portes du train se trouve décalé en aval des portes palières correspondantes.

Le réglage du dispositif de commande d'un train doit donc permettre de s'affranchir des caractères sur freineur ou sous freineur d'un train.

Un dispositif de commande régulée d'arrêt de précision destinée à un véhicule avec pilotage automatique est décrit dans le document US-A-5 583 769.

Un tel dispositif présente les caractéristiques du préambule de la revendication 1.

Il est connu qu'après la mise en service d'un train dont le dispositif de commande d'arrêt a été initialement réglé, les caractéristiques du train varient au cours de son exploitation du fait de l'usure ou du vieillissement.

La régulation mise en oeuvre est alors mal adaptée à compenser ces évolutions, ce qui se traduit par une reprise plus fréquente en commande manuelle à distance du train et une perte de temps d'exploitation.

Le problème technique objectif est la diminution de la durée d'indisponibilité des trains et de la perte du trafic du système à l'exploitation.

Le but de l'invention est donc d'améliorer la disponibilité et le trafic des trains.

A cet effet, l'invention a pour objet un dispositif de commande régulée, d'arrêt de précision destiné à un véhicule avec pilotage automatique comprenant une entrée cinématique observée apte à recevoir au moins une grandeur variable cinématique observée du véhicule, une entrée de consigne prédéterminée, apte à recevoir un signal de consigne, de commande non régulée, une sortie de commande régulée apte à fournir au moins une grandeur de commande dynamique régulée au véhicule, fonction de l'entrée cinématique observée et de l'entrée de consigne selon une fonction de transfert caractéristique prédéterminée du dispositif, la fonction de transfert comportant au moins un paramètre interne, caractérisé en ce que le dispositif comprend une unité de commande d'adaptation apte à modifier par une commande d'adaptation au moins un paramètre interne, la commande d'adaptation étant fonction de l'entrée cinématique observée et de l'entrée de consigne.

Suivant des modes particuliers de réalisation, le dispositif de commande comprend l'une ou plusieurs des caractéristiques suivantes prise(s) isolément ou selon toutes les combinaisons techniquement possibles :

- le dispositif comprend deux paramètres internes modifiables, le premier paramètre étant un retard de réponse dynamique associé au véhicule et le deuxième paramètre étant une commande de biais de régulation dynamique ;
- la commande d'adaptation est fonction d'un écart entre, d'une part, l'entrée cinématique observée, et, d'autre part, une grandeur cinématique attendue, déterminée à partir d'un modèle de réponse dynamique prédéterminé associé au véhicule et à partir de l'entrée de consigne ;
- la commande d'adaptation dépend en outre d'au moins un paramètre de convergence fonction d'une commande de régulation ;
- la fonction de commande est partitionnée en des classes définies en fonction de l'écart entre l'entrée cinématique observée et la grandeur cinématique attendue, et l'au moins un paramètre de convergence ;
- l'entrée de consigne est une entrée de réception d'une consigne de décélération du véhicule,
- l'entrée cinématique observée comprend une entrée de réception d'une vitesse observée et une entrée de réception d'une décélération observée,
- la sortie de commande régulée est une sortie de fourniture d'un signal de commande régulée de décélération du véhicule,
  et il comprend un ensemble d'unités composantes de la fonction de transfert du dispositif ;
- le dispositif comprend :

  - une unité de modélisation représentant une réponse dynamique attendue du véhicule à la consigne de décélération et permettant de déterminer la décélération attendue du véhicule comme grandeur cinématique attendue,
  - une unité de comparaison du signal de décélération attendue et du signal de décélération observée,

- une unité de régulation permettant de fournir un signal de commande rétroactif de correction de l'écart existant entre la décélération attendue et la décélération observée,
- une unité de synthèse pour déterminer un signal de commande régulée en fonction du signal de consigne et du signal rétroactif de correction;

- l'unité de commande d'adaptation comprend :

  - une première entrée d'unité de commande d'adaptation destinée à recevoir la consigne de décélération,
  - une deuxième entrée de commande d'adaptation destinée à recevoir la décélération observée,
  - un estimateur d'un temps de réponse en comparant la courbe de variation temporelle de la décélération attendue à celle de la décélération observée,
  - au moins un estimateur statistique de paramètre de convergence représentatif de la précision d'arrêt fonction de la décélération observée du véhicule et de la consigne de décélération du train ;
  - l'unité de régulation comprend
  - une entrée d'unité de régulation destinée à recevoir l'écart existant entre la décélération attendue et la décélération observée,
  - une sortie de fourniture d'une composante de régulation de type intégral dite commande intégrale, et l'unité d'adaptation comprend une troisième entrée connectée à la sortie de commande intégrale de l'unité de régulation ;
  - un estimateur de l'unité d'adaptation est apte à déterminer un critère de convergence fondé sur le signal de commande intégrale de régulation fournie en entrée ;
  - l'unité de commande d'adaptation est apte à :

    identifier par un procédé de classification une classe de freinage de véhicule fonction, d'une part, de l'écart d'un temps de réponse observé et d'un temps prédit par l'unité de modélisation de l'effet de la consigne envoyée au véhicule et d'autre part d'au moins un paramètre de convergence,
    affecter des commandes d'adaptation fonction de la classe de freinage du véhicule ;

- l'unité de commande d'adaptation comprend :

  - une entrée de fourniture d'une vitesse observée du train,
  - un premier estimateur statistique d'un premier paramètre de convergence représentatif de la performance d'arrêt fonction de la décélération observée et de la consigne de décélération,
  - un deuxième estimateur statistique d'un deuxième paramètre de convergence représentatif de la performance d'arrêt fonction de la vitesse observée, de la décélération observée et de la consigne de décélération ;
  - l'unité de commande d'adaptation comprend
    une première sortie apte à délivrer une commande de biais de régulation de la commande,
    une deuxième sortie apte à délivrer une commande d'ajustement du retard de réponse dynamique,
  - la première sortie de l'unité de commande d'adaptation est connectée à l'entrée de l'unité de régulation, et la deuxième sortie de l'unité de commande d'adaptation est connectée à l'entrée de l'unité de modélisation pour lui fournir une commande d'ajustement de retard ;

- le dispositif comprend :

  une entrée d'enclenchement / déclenchement du dispositif de commande d'arrêt, et
  des moyens d'enclenchement / déclenchement de la mise en fonctionnement du dispositif de commande d'arrêt ;

- le dispositif de d'enclenchement / déclenchement comprend :

  une entrée de commande apte à recevoir une entrée de commande de déclenchement de mode d'arrêt précis de tir au but,
  un commutateur à deux entrées et une sortie simple, la sortie étant connectée directement à l'entrée du véhicule, et la connexion d'une entrée à la sortie dépend du signal de commande d'enclenchement / déclenchement fournie en entrée de commande.

L'invention a pour objet également un procédé de commande régulée d'arrêt de précision de véhicule mis en oeuvre par un dispositif de commande régulée défini par une fonction de transfert ayant au moins un paramètre interne, comprenant les étapes consistant à :

- recevoir, en une entrée de consigne, une consigne prédéterminée de commande non régulée de véhicule,
- recevoir en une entrée cinématique observée une grandeur cinématique observée du véhicule,
- fournir en une sortie de commande régulée, un signal de commande réglée au véhicule,

caractérisé en ce qu'il comprend en outre une étape consistant à

- commander l'adaptation d'au moins un paramètre interne en fonction de l'entrée de consigne et de l'entrée cinématique observée.

Suivant des modes particuliers de réalisation, le procédé comprend l'une ou plusieurs des caractéristiques suivantes prise(s) isolément ou selon toutes les combinaisons techniquement possibles :

- le procédé comprend le étapes consistant à :

  - modéliser et calculer une réponse dynamique de véhicule à une consigne de commande du véhicule sous la forme d'une grandeur cinématique attendue,
  - comparer la grandeur cinématique attendue à la grandeur de décélération observée,
  - réguler la consigne de commande par la fourniture d'un signal de rétroaction formant une correction de l'écart existant entre la grandeur cinématique attendue et la grandeur cinématique observée,
  - effectuer la combinaison de la consigne et du signal rétroactif de correction pour déterminer une commande régulée ;

- l'étape de commande d'adaptation comprend les étapes consistant à :

  - recevoir en une première entrée la consigne commande,
  - recevoir en une deuxième entrée la grandeur cinématique observée,
  - estimer le temps de réponse dynamique en comparant la variation temporelle de la grandeur cinématique attendue à la grandeur cinématique observée,
  - estimer par une statistique un paramètre de convergence représentatif de la précision d'arrêt en fonction de la grandeur cinématique observée et de la consigne de commande ;

- l'étape de commande d'adaptation comprend l'étape consistant à :

  - recevoir une composante de régulation de type intégral fournie à l'étape de régulation, et l'estimation d'un critère de convergence est fondée sur la composante de régulation de type intégral fournie ;

- l'étape de commande d'adaptation comprend en outre les étapes consistant à :

  identifier par un procédé de classification une classe de freinage de train fonction, d'une part, de l'écart du temps de réponse observé et du temps prédit de l'effet de la consigne envoyée au véhicule au travers du dispositif de commande et d'autre part d'au moins un paramètre de convergence représentatif d'un arrêt, affecter des commandes d'adaptation fonction de la classe de freinage du train ;

- l'étape de commande d'adaptation comprend en outre l'étape consistant à:

  - recevoir en une entrée une vitesse observée du véhicule,

  et l'étape d'estimation comprend

  - une première étape d'estimation consistant à déterminer, par une première statistique, un premier paramètre de convergence représentatif de la performance du réglage, fonction de la décélération observée du train et de la consigne de décélération,
  - une deuxième étape d'estimation par une deuxième statistique un deuxième paramètre de convergence représentatif de la performance de réglage, fonction de la vitesse observée, de la décélération observée et de la consigne de décélération ;

- l'étape de commande d'adaptation comprend en outre les étapes consistant à :

délivrer en une première sortie une commande de biais de régulation de la commande régulée,
délivrer en une deuxième sortie une commande d'ajustement de retard;

- la commande d'ajustement de retard est fournie à l'unité de modélisation de la réponse dynamique du véhicule ;
- l'étape de commande d'adaptation comprend en outre l'étape consistant à :

  fournir un message d'avertissement du caractère hors gabarit d'un train en cas d'échec de la convergence des critères de convergence et/ou d'alignement du temps de réponse la prise d'effet de la consigne de décélération après un nombre d'arrêts prédéterminé ; et

- le procédé comprend en outre une étape consistant à :

  enclencher / déclencher le dispositif de commande régulée.

L'invention a pour objet également un train comportant le dispositif selon l'invention pour commander l'action du moteur et/ou du frein.

L'invention sera mieux comprise à la lecture de la description d'un mode de réalisation qui va suivre uniquement donnée à titre d'exemple et faite en se référant aux dessins sur lesquels :

- la figure 1 est un schéma fonctionnel d'un dispositif de pilotage automatique de train selon l'invention ;
- la figure 2 est un graphique d'une courbe de vitesse d'un train en fonction de la distance correspondant à une stratégie d'arrêt ;
- la figure 3 est un schéma fonctionnel du dispositif de commande régulée d'arrêt de précision ;

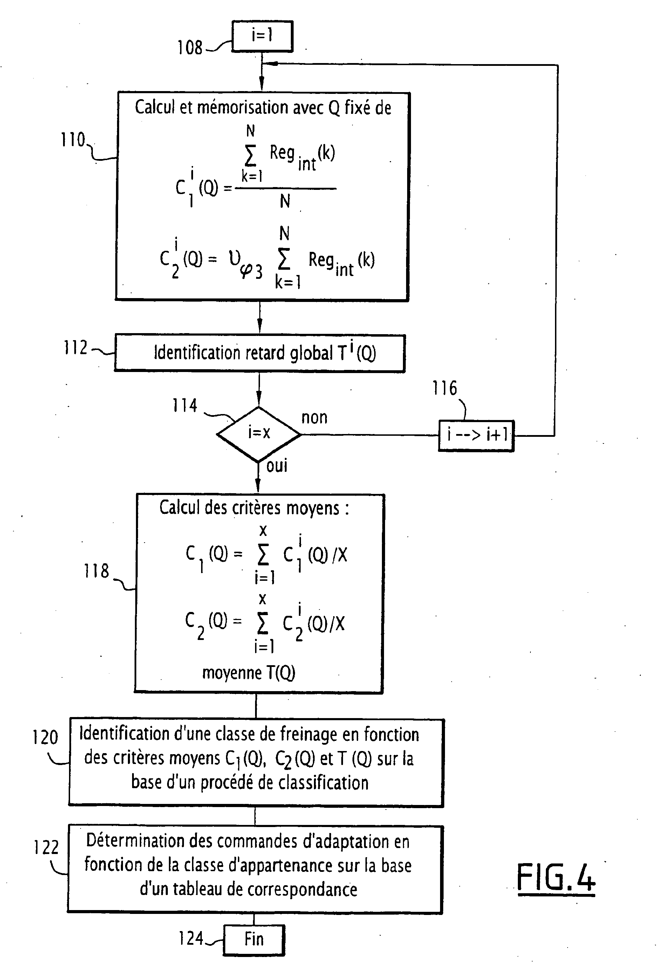

- la figure 4 est un organigramme du procédé d'élaboration de commandes d'adaptation ;
- la figure 5 est un graphique de courbe servant à l'identification du retard de prise d'effet de la consigne de décélération associé à un train sous-freineur ;
- la figure 6 est un graphique de courbe servant à l'identification du retard de prise d'effet de la consigne de décélération associé à un train sur-freineur ;
- la figure 7 est un graphique de classification des deux premières classes de freinage selon le critère $C_1$, le retard du modèle étant égal du retard identifié ;
- la figure 8 est une paire de graphiques de classification des autres classes par rapport à la figure 7 en fonction des critères $C_1$ et $C_2$, le retard du modèle étant différent du modèle identifié ;
- la figure 9 est un diagramme de classification qualitatif représentant les différentes étapes de classification suivant différents critères d'identification ;
- la figure 10 est un graphique de détermination des domaines de commande du dispositif de commande ;
- la figure 11 est un graphique des performances simulées des précisions d'un parc de trains lorsque l'unité de commande d'adaptation est inactive ; et
- la figure 12 est un graphique des performances simulées des précisions d'arrêt des trains lorsque l'unité de commande d'adaptation est active.

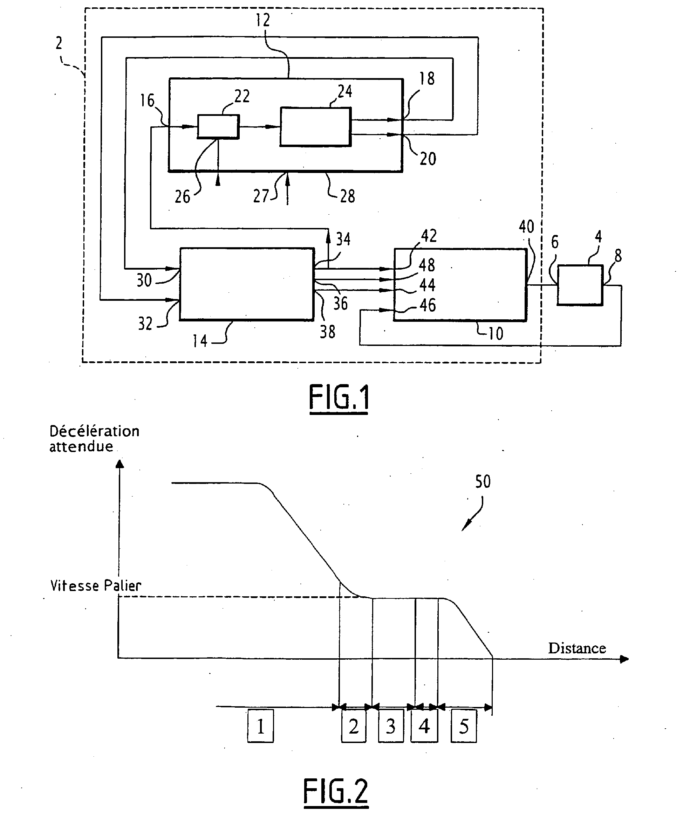

La figure 1 représente un dispositif de pilotage automatique 2 d'un train 4 fonctionnant sans commandes fournies par un conducteur.

Le train 4 comprend un ensemble de voitures avec des moteurs de traction et des freins servant au freinage et à l'arrêt du train. En variante, le train peut être un véhicule automatique quelconque.

Le train 4 est apte à recevoir, à une entrée de commande 6, une commande régulée d'accélération/décélération et à fournir, en une sortie d'observation 8, l'accélération/décélération observée ici sous la forme d'une mesure à bord du train.

Le dispositif de pilotage automatique 2 comprend un dispositif de commande régulée 10 d'arrêt de précision, un estimateur de paramètres cinématiques 12 du train 4 et une unité centrale 14 de pilotage du train sans conducteur.

L'estimateur de paramètres cinématiques 12 comprend une première entrée 16 d'estimateur destinée à recevoir une consigne d'accélération/décélération élaborée par et issue de l'unité centrale 14. L'estimateur de paramètres cinématiques comprend également une première et deuxième sorties 18, 20 d'estimateur aptes à fournir respectivement une distance estimée d par rapport à une balise de localisation au sol et une vitesse cinématique v estimée du train.

L'estimateur de paramètres cinématiques 12 comprend en amont, un circuit 22 de retard d'effet de la consigne et, en aval, un intégrateur cinématique 24 à prédicteur/correcteur. Le circuit de retard 22 est apte à recevoir la consigne d'accélération/décélération en provenance de l'entrée 16 et à recevoir, en une entrée 26 de réglage de retard, une commande de réglage de retard notée τ. L'estimateur de paramètres cinématiques 28 comprend en outre une entrée d'initialisation 27, destinée à recevoir des paramètres d'initialisation de traitement cinématique.

L'unité centrale de pilotage 14 chargée de la coordination des tâches du dispositif de pilotage automatique 2 comprend une première entrée 30 et une deuxième entrée 32 destinées à recevoir respectivement la distance estimée d et la vitesse estimée v issues de l'estimateur de paramètres cinématiques 12. L'unité centrale de pilotage 14 comprend en outre une première sortie de signal de consigne d'accélération / décélération 34 et une deuxième sortie 36 de fourniture de signal de sélection de mode conduite / freinage et une troisième sortie 38 de fourniture de la vitesse v cinématique du train.

Le dispositif de commande régulée 10 comporte une sortie de commande régulée 40, apte à délivrer un signal de commande régulée du train, et, connectée à l'entrée 6 du train 4.

Le dispositif de commande d'arrêt de précision comprend également une première entrée 42 apte à recevoir une consigne d'accélération/décélération issue de la sortie 34 de l'unité centrale, une deuxième entrée 44 de réception du signal d'estimation de vitesse v issu de la sortie 38, une troisième entrée 46, apte à recevoir la décélération observée du train, issue de la sortie 8 du train 4 et une quatrième entrée 48 de commande de sélection de mode issue de la sortie 36 de l'unité centrale

En fonctionnement, le dispositif de pilotage automatique 2 permet de mettre en oeuvre une stratégie d'arrêt telle que représentée par la figure 2.

La figure 2 représente l'allure de la vitesse réalisée du train 50 en fonction de la distance pour la stratégie d'arrêt choisie.

La phase 1, référencée par un chiffre 1 encadrée par un carré, représente une phase de freinage jusqu'à une distance proche du point d'arrêt en station succédant à une conduite à vitesse constante.

La phase 2 permet d'annuler l'effort de freinage de manière à assurer le confort des passagers en évitant l'à-coup final de freinage.

La phase 3 est une phase à vitesse constante $v_{\varphi3}$ dite « vitesse de palier ». Cette vitesse doit être suffisamment faible pour optimiser le confort et pas trop faible pour éviter à un train sur-freineur de s'arrêter en amont du point d'arrêt en station. La distance parcourue à faible vitesse doit être la plus petite possible, et ce pour assurer un confort visuel en plus d'un confort de conduite.

La phase 4 est optionnelle. Elle est utile pour des trains où il est impossible de maintenir le système de freinage pneumatique en pression en appliquant un effort de freinage nul. Cette phase lorsqu'elle est présente est la phase de mise en pression d'un freinage pneumatique.

Enfin, la phase 5 dite « phase de tir au but » est la phase de freinage final. Le freinage final ne doit pas être trop fort toujours pour assurer le confort des passagers. Le freinage doit permettre de maintenir le train à l'arrêt.

Pendant les phases 1 à 4, l'unité centrale de pilotage 14 sélectionne un premier mode de commande, dit de conduite, par l'envoi d'une commande de sélection de mode issue de la sortie 36 au dispositif de commande d'arrêt de précision 10. Dans ce mode de conduite, le dispositif de commande d'arrêt 10 est transparent et transmet la consigne de décélération issue de l'unité centrale de pilotage 14, et la transmet intégralement à l'entrée du train. Durant les quatre phases 1 à 4, la commande effective reçue par le train 4 est élaborée seulement par l'unité centrale de pilotage 14 et est égale à la consigne de pilotage.

Pendant la phase 3, l'unité centrale de pilotage 14 vérifie si la phase de tir au but doit être déclenchée en comparant une valeur de seuil à la distance d'arrêt parcourue, calculée par l'estimateur de paramètres cinématiques.

Pour déterminer la distance d'arrêt parcourue, l'estimateur des paramètres cinématiques 12 utilise une modélisation de freinage du train en accélération/décélération et sa dérivée appelée aussi « jerk ». L'estimateur des paramètres cinématiques 12 intègre le modèle en accélération/décélération deux fois, une fois pour obtenir la vitesse cinématique v et une deuxième fois pour obtenir la distance d, des conditions initiales ayant été réglées en entrée 27 à partir d'un signal de localisation.

Le calcul prédictif est fait à chaque cycle de calcul de l'unité centrale 14 et les deux intégrations sont faites à partir d'une méthode d'intégration numérique basée sur un prédicteur correcteur 24.

Ainsi, lorsque la distance parcourue d calculée est proche du point d'arrêt en station, les phases 4 et 5 sont déclenchées par l'unité centrale de pilotage 14.

En utilisant ce principe de calcul de la distance d'arrêt, l'unité de pilotage s'affranchit du comportement de train sous-freineur ou sur-freineur. De plus, cela permet de ne pas utiliser une balise de déclenchement dédiée pour le freinage et située en entrée de station pour les phases 4 et 5, et de surcroît la précision d'arrêt est augmentée.

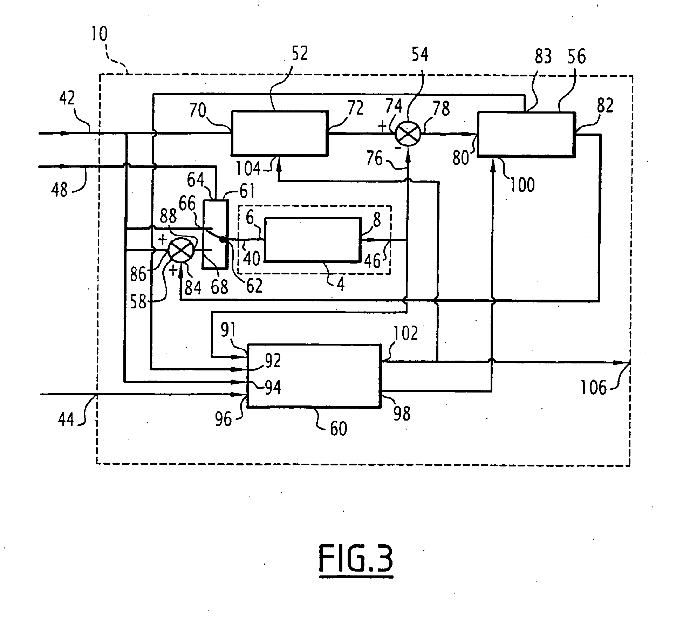

La figure 3 représente une forme de réalisation du dispositif de commande régulée 10.

Le dispositif de commande régulée 10 comprend une unité de modélisation ou circuit de modèle 52 de la réponse dynamique du train, une unité de comparaison 54, ici un comparateur, de la réponse du modèle à la réponse réelle du train 4, une unité de régulation 56 de fourniture d'une commande globale rétroactive de correction, et une unité de synthèse, ici un additionneur 58 pour déterminer un signal de commande régulée du train fonction du signal de consigne et du signal rétroactif de correction.

Le dispositif de commande régulée 10 comprend en outre une unité de commande d'adaptation 60 pour régler des paramètres de commandes caractéristiques de la performance en précision de l'arrêt du train, et des moyens d'enclenchement / déclenchement de la mise en fonctionnement du dispositif de commande d'arrêt, ici un commutateur de mode 61.

Par commodité de représentation des connexions, le train 4 est représenté sur la figure 3 à l'intérieur d'un grand carré tracé en pointillés délimitant le dispositif de commande régulée 10 mais le train ne fait pas partie du dispositif de commande régulée 10. C'est pourquoi, il est délimité à l'intérieur d'un deuxième carré plus petit en pointillés destiné à le séparer du dispositif de commande régulée 10 qui l'entoure.

Le commutateur de modes 61 est pourvu d'une sortie simple 62 destinée à fournir le signal de commande régulée en entrée 6 du train 4 au travers de la sortie 40. Le commutateur de modes 61 comprend également une première entrée 64 de commande connectée à 44, apte à recevoir une commande de mode, une deuxième entrée 66 de mode de conduite connectée à 42 destinée à recevoir le signal de consigne d'accélération/décélération, et une troisième entrée 68 apte à recevoir un signal de commande régulée d'arrêt.

Le circuit de modèle 52 de la réponse dynamique du train comprend une première entrée 70 pour recevoir le signal de consigne de décélération du train 4 et une sortie 72 pour délivrer la réponse dynamique de décélération modélisée du train 4. La sortie 72 du circuit de modèle 52 est connectée à une première entrée 74 du comparateur 54 de réception de la réponse du modèle.

Le comparateur 54 comprend également une deuxième entrée 76 connectée à l'entrée 48 pour recevoir la décélération observée du train issue de la sortie 8 du train 4.

Le comparateur comprend enfin une sortie 78 de fourniture de signal d'erreur connectée à une première entrée 80 de l'unité de régulation 56.

L'unité de régulation 56 permet de déterminer un signal de correction dit de « régulation » selon deux composantes, une première dite proportionnelle et une deuxième dite intégrale.

L'unité de régulation 56 comprend une première sortie 82 pour délivrer le signal de correction globale et une deuxième sortie 83 permettant de délivrer le signal de commande intégrale.

L'additionneur 58 comprend une première entrée 84 connectée à la première sortie 82 de l'unité de régulation 56 et une deuxième entrée 86 connectée à 42 permettant de recevoir le signal de consigne de décélération. L'additionneur 58 comprend également une sortie 88 d'additionneur permettant de délivrer le résultat de l'addition des deux signaux fournis en entrées 84 et 86.

L'unité de commande d'adaptation 60 comprend une première entrée 91 connectée à 48 destinée à recevoir l'observation d'accélération / décélération du train issue de 8, une deuxième entrée 92 connectée à 83 apte à recevoir la commande intégrale de l'unité de régulation 56, une troisième entrée 94 connectée à 42 apte à recevoir la consigne de décélération, et une quatrième entrée 96 connectée à 44 pour recevoir l'information de vitesse cinématique v du train 4.

L'unité de commande d'adaptation 60 comprend également une première sortie 98 apte à fournir un biais de commande de régulation noté K à une deuxième entrée 100 d'adaptation de l'unité de régulation 56.

L'unité de commande d'adaptation 60 comprend également une deuxième sortie 102 apte à fournir une commande d'adaptation relative au retard notée τ à une deuxième entrée 104 de réglage du circuit de modèle 52 de la réponse dynamique du train 4. En outre, de manière optionnelle la deuxième sortie de l'unité d'adaptation est connectée à une sortie auxiliaire 106 du dispositif de commande permettant de fournir la valeur τ de la commande d'adaptation de retard à un autre circuit.

En fonctionnement au cours des phases 4 et 5, le signal de commande de sélection est placé dans un deuxième mode dit mode d'arrêt. Ainsi, le dispositif de commande d'arrêt 10 est activé pour commander l'arrêt de précision dans la phase de tir au but.

En fonctionnement, un procédé est mis en oeuvre par l'unité de commande d'adaptation 60, dans lequel des classes d'appartenance du train caractérisant son type de freinage sont déterminées. En fonction de la classe d'appartenance du train, l'unité de commande d'adaptation 60 fournit différentes commandes, à savoir le biais de commande de régulation K en 56 et la commande d'adaptation de retard τ en 52.

Le procédé mise en oeuvre par l'unité de commande d'adaptation 60 est décrit en détail ci-dessous.

Dans une étape initiale 108, un compteur d'arrêts i est initialisé à la valeur 1. Pour chaque arrêt i d'un train considéré ayant une charge d'inertie Q, supposée ici quasiment constante et permanente, une étape de calcul de critère 110 et une étape d'identification du retard 112 sont mises en oeuvre.

Dans l'étape 110, un premier critère $C_1^i(Q)$ et un deuxième $C_2^i(Q)$ sont calculés de la façon suivante.

$$C_1^i(Q) = \sum_{k=1}^{N} \mathrm{Re}\, g_{int}(k) / N$$

$$C_2{}^i(Q) = v_{\varphi 3} \sum_{k=1}^{N} \mathrm{Re}\, g_{\mathrm{int}}(k)$$

où : k désigne un numéro d'échantillon d'un échantillonnage de mesures effectué pendant les phases 4 et 5,

N désigne la taille d'une statistique,

$\mathrm{Reg_{int}}(k)$ désigne la composante intégrale de la commande de l'unité de régulation 56 correspondant à l'échantillonnage d'ordre k fournie en entrée 92,

$V_{\varphi 3}$ désigne la valeur de la vitesse palier du train durant la phase 3 fournie en entrée 96,

Il est supposé que la valeur de N est choisie de manière à permettre la détermination d'une valeur de $C_1{}^i(Q)$ et d'une valeur de $C_2{}^i(Q)$ convergentes par rapport à la variable k.

Dans l'étape 112, l'identification du retard de prise d'effet effective de la consigne de décélération est mise en oeuvre.

Un test dans l'étape 114 est effectué sur le nombre d'arrêts réalisé par le train, comptabilisé par la valeur i du compteur d'arrêts en comparant i à une valeur de seuil x prédéterminée. Si la valeur seuil n'est pas atteinte, la valeur i du compteur est incrémentée d'une unité et les étapes 110,112 sont à nouveau effectuées.

Lorsque la valeur seuil x est atteinte par le compteur, des premier et second critères moyens $C_1{}^i(Q)$ et $C_2{}^i(Q)$ ainsi qu'un retard moyen T(Q) sont calculés à l'étape 118 selon les algorithmes suivants :

$$C_1(Q) = \sum_{i=1}^{X} C_1^i(Q)/X$$

$$C_2(Q) = \sum_{i=1}^{X} C_2^i(Q)/X$$

$$T(Q) = \sum_{i=1}^{X} T^i(Q)/X$$

où:

i : désigne un ordre d'arrêt du train ou indice d'essai

x : désigne la taille d'une statistique d'arrêts,

$C_1^i(Q)$ : désigne la valeur du premier critère calculé à l'étape 110 pour l'arrêt d'ordre i du train considéré,

$C_2^i(Q)$ : désigne la valeur du deuxième critère calculé à l'étape 110 pour l'arrêt d'ordre i du train considéré

$T^i(Q)$: désigne la valeur de retard de prise d'effet de la consigne identifiée pendant l'essai d'ordre i du train.

Dans une étape suivante 120, en se fondant sur un procédé de classification, une classe de freinage caractérisant un type de freinage de train est identifiée et attribuée au train en fonction des critères moyens de convergence $C_1(Q)$, $C_2(Q)$ et du retard moyen T(Q) que nous supposerons ici indépendants de Q et que nous noterons par simplification $C_1$, $C_2$ et T.

Dans une étape suivante 122, les commandes d'adaptation, fonctions de la classe de freinage du train, sont déterminées sur la base d'un procédé d'affectation de commande qui va être décrit ci-dessous.

Dans une étape finale 124, il est vérifié que les paramètres de réglage ont bien été modifiés.

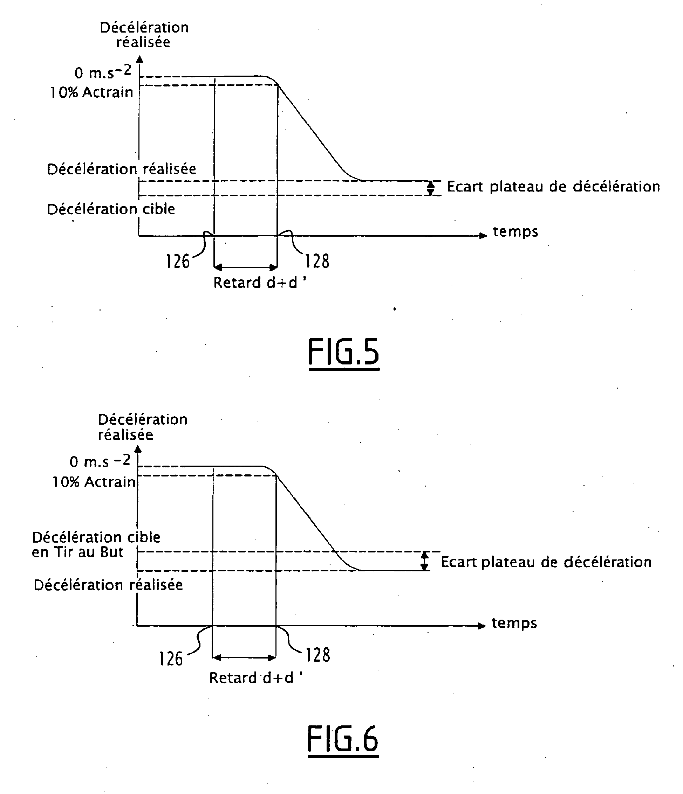

Les figures 5 et 6 représentent des graphiques de courbes servant à mettre en oeuvre le procédé d'identification du retard $T^i(Q)$ de l'étape 112.

Ici, les graphiques de courbes sont enregistrés par l'unité de commande d'adaptation 60 sous forme de suite d'échantillons numérisés de la décélération mesurée du train 4 fournie en entrée 91.

La décélération cible indiquée sur les figures 5 et 6 est la consigne de décélération de tir au but fournie par l'unité centrale de pilotage 14 à la troisième entrée 94 de l'unité de commande d'adaptation 60 avant l'exécution de la phase de tir au but.

L'instant de déclenchement 126 de la phase de tir au but est l'instant de réception de la consigne de décélération cible par le dispositif d'arrêt et donc également par l'unité de commande d'adaptation.

L'instant de la prise d'effet de la consigne de décélération par le train est le moment 128 où une décélération égale à 10% de la valeur cible est observée sur la valeur de décélération observée du train fournie en entrée 91.

Le décalage temporel des instants 128 et 126 représente le retard $T^i(Q)$.

Lorsque la décélération réalisée est inférieure en valeur absolue à la décélération cible du train 4, le train est sous freineur comme représenté sur la figure 5.

Lorsque la décélération réalisée stabilisée est supérieure en valeur absolue à la décélération cible du train 4, le train est sur freineur comme représenté sur la figure 6.

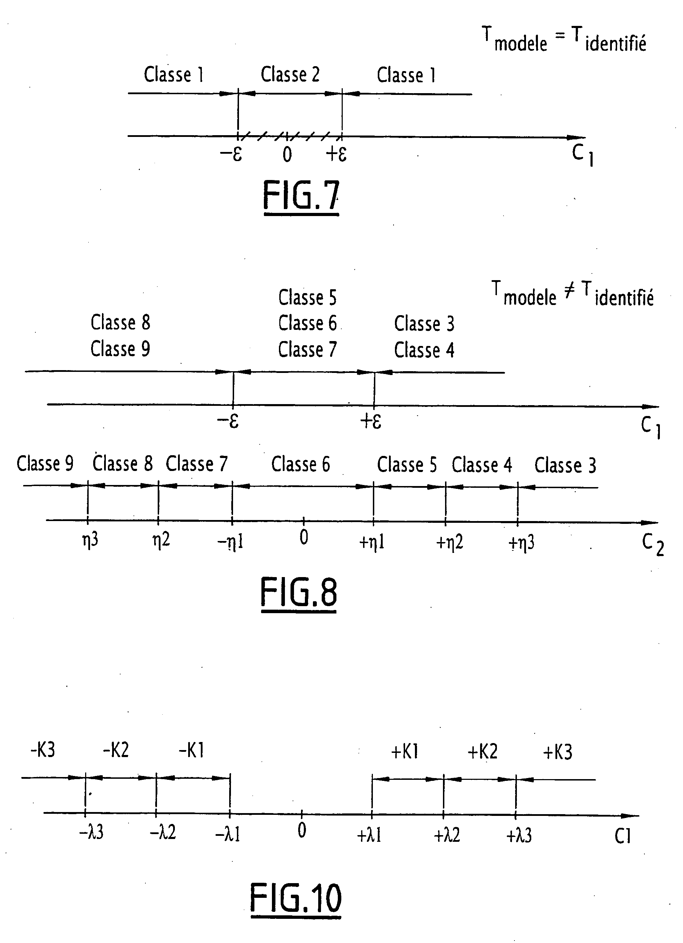

Les figures 7 et 8 représentent des graphiques servant à définir le procédé de classification des freinages de train.

Selon un premier niveau de classification fondé sur l'écart entre le retard du modèle D et le retard moyen identifié T(Q), on procède suivant l'une des deux classifications suivantes :

une classification fonction du critère $C_1$ seulement si l'écart est nul (cas correspondant à la figure 7),

une classification fonction des critères $C_1$ et $C_2$ pris ensemble, s'il existe un écart (cas correspondant à la figure 8).

Dans le cas représenté sur la figure 7, où le retard du modèle D est égal au retard identifié T, une valeur de seuil $\varepsilon$ permet de partitionner l'ensemble des valeurs de $C_1$ en trois intervalles dont un central défini par $[-\varepsilon,+\varepsilon]$ et hachuré sur la figure 7.

Il est déterminé que si $|C_1| \leq \varepsilon$ alors le train appartient à la classe 2, et que dans le cas contraire, le train appartient à la classe la classe 1.

Dans le cas où le retard du modèle D est différent du retard identifié T, on procède selon le procédé de classification décrit à la figure 8.

Dans une première étape, selon la même valeur de seuil $\varepsilon$ que mentionné ci-dessus, trois familles de classes sont distinguées suivant la valeur de $C_1$ , à savoir :

si $|C_1| \leq \varepsilon$, une première famille constituée des classes 5, 6 et 7,

si la valeur de $C_1$ est inférieur à $-\varepsilon$, une deuxième famille constituée des classes 8 et 9,

si la valeur de $C_1$ est supérieur à $+\varepsilon$, une troisième famille constituée des classes 3 et 4.

Ensuite, on procède au sein d'une même famille à une classification plus détaillée du niveau des classes, fondé sur la valeur de $C_2$,

Les valeurs de $C_2$ sont partitionnées selon leur positionnement par rapport à six valeurs de seuil, $\eta1, \eta2, \eta3$, $-\eta1, -\eta2$ et $-\eta3$ avec $\eta1 < \eta2 < \eta3$.

Au sein de la première famille, lorsque $C_2$ est compris dans l'intervalle $[-\eta1, +\eta1]$, le train appartient à la classe 6, lorsque $C_2$ est compris dans l'intervalle $]+\eta1, +\eta2]$, le train appartient à la classe 5, lorsque $C_2$ est compris dans l'intervalle $[-\eta2, -\eta1[$, le train appartient à la classe 7.

Au sein de la deuxième famille, lorsque $C_2$ est compris dans l'intervalle $[-\eta3, -\eta2[$, le train appartient à la classe 8, lorsque $C_2$ est strictement inférieur à $-\eta3$, le train appartient à la classe 9.

Au sein de la troisième famille, lorsque $C_2$ est compris dans l'intervalle $]+\eta2, +\eta3]$, le train appartient à la classe 4, lorsque $C_2$ est strictement supérieur à $+\eta3$, le train appartient à la classe 3.

L'ensemble du procédé de classification décrit ci-dessus est représenté dans le tableau 1.

**Tableau 1**

| 1ère règle | 2ème règle de sélection | 3ème règle de sélection | Classe |
|---|---|---|---|
| Si T = D | Si $\|C_1\| \leq \varepsilon$ | pas de condition | Classe 2 |
| | Si $\|C_1\| > \varepsilon$ | pas de condition | Classe 1 |

(suite)

| 1ère règle | 2ème règle de sélection | 3ème règle de sélection | Classe |
|---|---|---|---|
| Si $T \neq D$ | Si $|C_1| \leq \varepsilon$ | Si $|C_2| \leq \eta_1$ | Classe 6 |
| | | Si $\eta1 < C_2 \leq \eta_2$ | Classe 5 |
| | | Si $-\eta_2 \leq C_2 < -\eta_1$ | Classe 7 |
| | Si $C_1 < -\varepsilon$ | Si $-\eta_2 \leq C_2 < -\eta_2$ | Classe 8 |
| | | Si $C_2 < -\eta_3$ | Classe 9 |
| | Si $C1 > \varepsilon$ | Si $\eta_3 \geq c_2 > +\eta_2$ | Classe 4 |
| | | $C_2 < +\eta_3$ | Classe 3 |

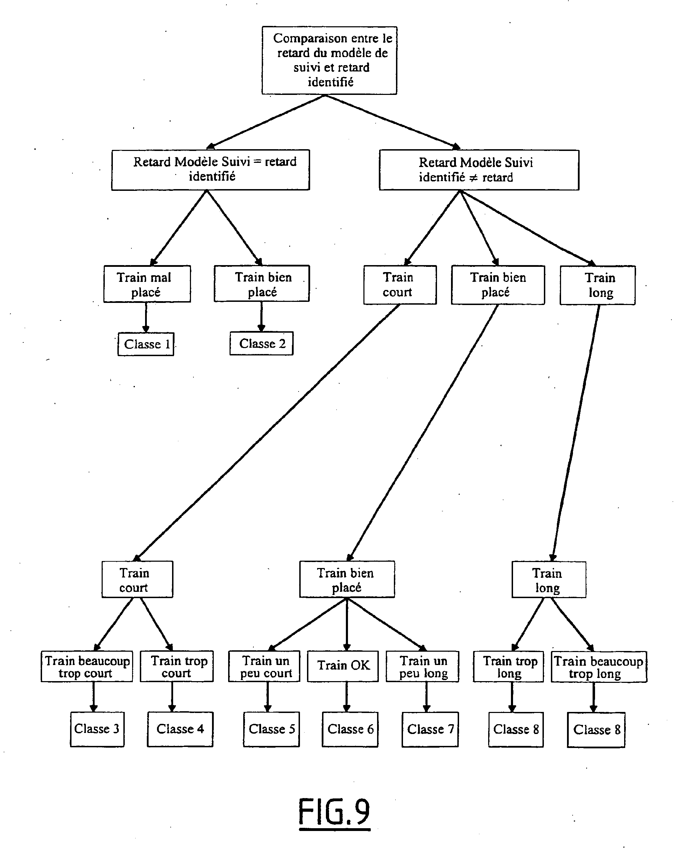

Une description du procédé de classification en classes, exprimée en termes qualificatifs est fournie en figure 9. Les trois niveaux de classifications sont repris, le premier étant celui du retard de prise d'effet de la consigne, le deuxième celui de la valeur du critère $C_1$, et le troisième celui de la valeur du critère $C_2$. Ici un train court signifie un train sur-freineur, et un train long signifie un train sous-freineur.

Selon la classe d'appartenance du train, différentes commandes pourront être fournies par le système d'adaptation de commandes. Deux types de commandes sont fournis, à savoir un biais K à rajouter à la commande de régulation et un décalage de retard T.

Cinq états de décalages de retard peuvent être fournis à savoir une absence de décalage ou décalage de valeur nulle, un décalage de valeur positive élevée $+T_H$, un décalage de valeur basse positive $+T_L$, un décalage de valeur basse négative $-T_L$ et un décalage de valeur élevée négative $-T_H$.

Concernant le biais K rajouté à la commande de régulation, neuf valeurs de commande de bais peuvent être fournies, à savoir une valeur de biais élevée positive +K3, une valeur de biais intermédiaire positive +K2, une valeur de biais basse positive +K1, une valeur de biais élevée négative -K3, une valeur de biais basse négative -K1, une valeur de biais intermédiaire négative -K2, une valeur de biais positive spécifique à la classe 6 notée $+K_{comb}$, une valeur de biais négative spécifique à la classe 6, $-K_{comb}$, ainsi qu'une valeur de biais nulle.

Pour l'affectation des commandes correspondant à la classe 1, un traitement plus fin est mis en oeuvre à l'aide du graphique illustré sur la figure 10.

Pour la classe 1, l'affectation des commandes dépend de la valeur prise par $C_1$ et de son positionnement par rapport à un ensemble de valeurs de partitionnement notées $-\lambda3, -\lambda2, -\lambda1, 0, +\lambda1, +\lambda2, +\lambda3$ avec $\lambda1 < \lambda2 < \lambda3$.

Selon l'intervalle auquel appartient $C_1$, une commande de biais est attribuée.

Un tableau d'affectation des valeurs de commande définies ci-dessus aux classes est fourni dans le tableau 2.

**Tableau 2**

| N° Classe | Biais régulateur K | Commande de réglage du retard $\tau$ |
|---|---|---|
| Classe 1 | si $+\lambda_1 \leq C_1 < +\lambda_2$ : +K1<br>si $+\lambda_2 \leq C_1 < +\lambda_3$ : +K2<br>si $+\lambda_3 \leq C_1$ : +K3<br>si $-\lambda_2 < C_1 \leq -\lambda_1$ : $-K_1$<br>si $-\lambda_3 < C_1 \leq -\lambda_2$ : -K2<br>si $C_1 \leq -\lambda_3$ . -K3 | 0 |
| Classe 2 | 0 | 0 |
| Classe 3 | 0 | $+\tau_H$ |
| Classe 4 | 0 | $+\tau_L$ |
| Classe 5 | 0 | $+\tau_L$ |
| Classe 6 | si $D-T \geq 0$ : $-K_{comb}$ | $-\tau_L$ |
| | si $D-T < 0$ : $+K_{comb}$ | $+\tau_L$ |
| Classe 7 | 0 | $-\tau_L$ |
| Classe 8 | 0 | $-\tau_L$ |

(suite)

| N° Classe | Biais régulateur K | Commande de réglage du retard $\tau$ |
|-----------|--------------------|--------------------------------------|
| Classe 9  | 0                  | - $\tau_H$                           |

Il est à noter que la commande de biais de correction de la régulation est limitée à deux bornes -K3, +K3.

Si l'une de ces deux bornes est atteinte et que le freinage du train n'a pas pu être ajusté et est resté dans une classe à performances médiocres, un message pourra être généré pour préciser le caractère non ajustable des paramètres de commandes. Ceci peut signifier que le train n'est pas commandable pour atteindre la performance souhaitée et se trouve hors gabarit.

Avec le dispositif d'adaptation, les performances d'arrêt des trains sont sensiblement améliorées.

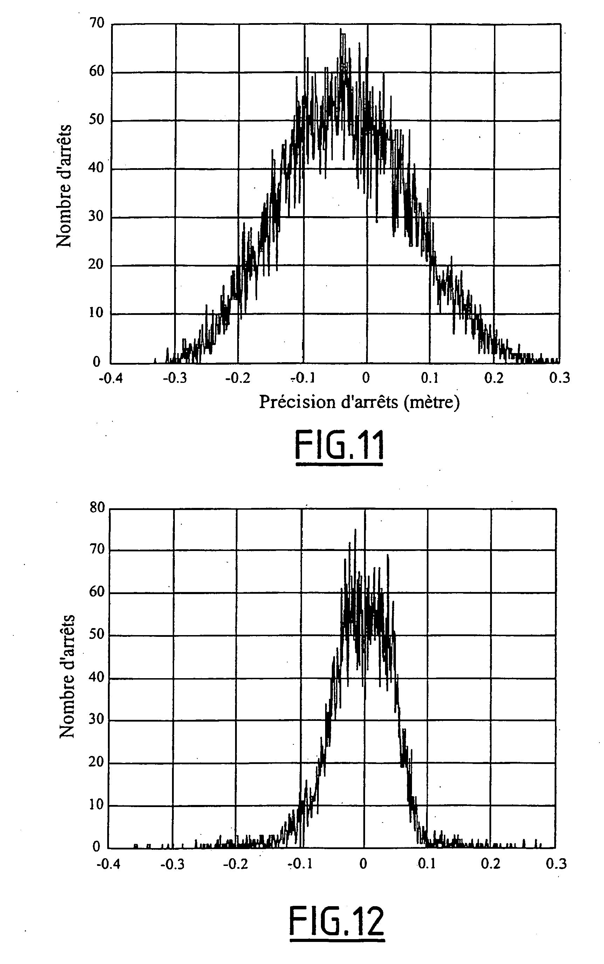

Sur la figure 11, sont représentées des précisions d'arrêt simulées d'un parc de trains, commercialisés par ALSTOM TRANSPORT sous le nom commercial « Metropolis », sur un ensemble de 15000 arrêts lorsque le système d'adaptation est inactif tandis que sur la figure 12 sont représentées les précisions d'arrêt simulées lorsque le système d'adaptation est inactif.

Sans le mécanisme d'adaptation, il apparaît que la dispersion des précisions d'arrêt est d'environ plus ou moins 35 cm, tandis qu'avec le mécanisme d'adaptation, la dispersion des arrêts est d'environ plus ou moins 10 cm, une fois le mécanisme d'adaptation établi.

Il apparaît donc qu'en régime stabilisé la dispersion des arrêts est trois fois plus faible que la dispersion sans le mécanisme d'adaptation.

Avantageusement, des reprises en commande manuelle à distance des trains ne sont pas nécessaires pour aligner les trains avec les portes palières.

Avantageusement, il n'est pas nécessaire de prévoir des tâches fréquentes de maintenance en atelier pour la mise à jour du réglage du dispositif de commande d'arrêt du train.

Ainsi, la disponibilité des trains et le trafic sont améliorés.

Avantageusement, un outil d'évaluation du vieillissement du dispositif de commande d'arrêt est fourni avec une simplification des tâches de maintenance qui ne consistent alors qu'à de simples remplacements de modules.

Avantageusement encore, l'installation du train lorsqu'il entre dans le réseau pour sa mise en service est simplifiée et ne nécessite pas de réglages par un opérateur sur le matériel ou le logiciel.

**Revendications**

1. Dispositif de commande régulée (10) d'arrêt de précision destiné à un véhicule (4) avec pilotage automatique comprenant :

   une entrée cinématique (44, 46) observée apte à recevoir au moins une grandeur variable cinématique observée du véhicule (4),
   une entrée de consigne (42) prédéterminée, apte à recevoir un signal de consigne, de commande non régulée,
   une sortie (40) de commande régulée apte à fournir au moins une grandeur de commande dynamique régulée au véhicule (4), fonction de l'entrée cinématique (44, 46) observée et de l'entrée de consigne (42) selon une fonction de transfert caractéristique prédéterminée du dispositif (10), la fonction de transfert comportant au moins un paramètre interne (K, $\tau$),
   **caractérisé en ce que** le dispositif (10) comprend une unité de commande d'adaptation (60) apte à modifier par une commande d'adaptation au moins un paramètre interne (K, $\tau$), la commande d'adaptation étant fonction de l'entrée cinématique (44, 46) observée et de l'entrée de consigne (42).

2. Dispositif de commande régulée (10) selon la revendication 1, **caractérisé en ce qu'**il comprend deux paramètres internes modifiables (K, $\tau$), le premier paramètre ($\tau$) étant un retard de réponse dynamique associé au véhicule et le deuxième paramètre (K) étant une commande de biais de régulation dynamique.

3. Dispositif de commande régulée (10) selon l'une quelconque des revendications 1 à 2, **caractérisé en ce que** la commande d'adaptation est fonction d'un écart entre, d'une part, l'entrée cinématique (44, 46) observée, et, d'autre part, une grandeur cinématique attendue, déterminée à partir d'un modèle de réponse dynamique (52) prédéterminé associé au véhicule (4) et à partir de l'entrée de consigne (42).

4. Dispositif de commande régulée (10) selon la revendication 3, **caractérisé en ce que** la commande d'adaptation (K, τ) dépend en outre d'au moins un paramètre de convergence (C$_1$,C$_2$) fonction d'une commande de régulation (Reg$_{int}$).

5. Dispositif de commande régulée (10) selon la revendication 4, **caractérisé en ce que** la fonction de commande (K, τ) est partitionnée en des classes définies en fonction de l'écart entre l'entrée cinématique observée (44, 46) et la grandeur cinématique attendue, et l'au moins un paramètre de convergence (C$_1$,C$_2$).

6. Dispositif de commande régulée selon l'une quelconque des revendications 1 à 5, **caractérisé en ce que :**

   - l'entrée de consigne est une entrée (42) de réception d'une consigne de décélération du véhicule (4),
   - l'entrée cinématique observée comprend une entrée (44) de réception d'une vitesse observée et une entrée (46) de réception d'une décélération observée,
   - la sortie de commande régulée est une sortie (40) de fourniture d'un signal de commande régulée de décélération du véhicule (4),

   et **en ce qu'**il comprend un ensemble d'unités composantes de la fonction de transfert (52, 56, 58, 61) du dispositif (10).

7. Dispositif de commande régulée (10) selon la revendication 6, **caractérisé en ce qu'**il comprend :

   - une unité de modélisation (52) représentant une réponse dynamique attendue du véhicule (10) à la consigne de décélération et permettant de déterminer la décélération attendue du véhicule (4) comme grandeur cinématique attendue,
   - une unité de comparaison (54) du signal de décélération attendue et du signal de décélération observée,
   - une unité de régulation (56) permettant de fournir un signal de commande rétroactif de correction de l'écart existant entre la décélération attendue et la décélération observée,
   - une unité de synthèse (58) pour déterminer un signal de commande régulée en fonction du signal de consigne et du signal rétroactif de correction,

8. Dispositif de commande régulée (10) selon l'une des revendications 6 à 7, **caractérisé en ce que** l'unité de commande d'adaptation (60) comprend :

   - une première entrée (94) d'unité de commande d'adaptation (60) destinée à recevoir la consigne de décélération,
   - une deuxième entrée (91) de commande d'adaptation destinée à recevoir la décélération observée,
   - un estimateur d'un temps de réponse en comparant la courbe de variation temporelle de la décélération attendue à celle de la décélération observée,
   - au moins un estimateur statistique de paramètre de convergence (C1, C2) représentatif de la précision d'arrêt fonction de la décélération observée du véhicule et de la consigne de décélération du train.

9. Dispositif de commande régulée selon l'une des revendications 7 à 8, **caractérisé en ce que** l'unité de régulation (56) comprend

   - une entrée (80) d'unité de régulation destinée à recevoir l'écart existant entre la décélération attendue et la décélération observée,
   - une sortie (83) de fourniture d'une composante de régulation de type intégral dite commande intégrale,

   et **en ce que** l'unité d'adaptation (60) comprend une troisième entrée (92) connectée à la sortie (83) de commande intégrale de l'unité de régulation (56).

10. Dispositif de commande régulée selon l'une quelconque des revendications 8 à 9, **caractérisé en ce qu'**au moins un estimateur de l'unité d'adaptation (60) est apte à déterminer un critère de convergence fondé sur le signal de commande intégrale de régulation fournie en entrée (92).

11. Dispositif de commande régulé selon l'une des revendications 1 à 10, **caractérisé en ce que** l'unité de commande d'adaptation (60) est apte à :

   identifier par un procédé de classification (120) une classe de freinage de véhicule (4) fonction, d'une part, de l'écart d'un temps de réponse observé (T) et d'un temps prédit (D) par l'unité de modélisation (52) de l'effet de la consigne envoyée au véhicule (4) et d'autre part d'au moins un paramètre de convergence (C1, C2).

affecter des commandes d'adaptation (K, τ) fonction de la classe de freinage du véhicule (4).

**12.** Dispositif de commande régulée selon l'une des revendications 6 à 11, **caractérisé en ce que** l'unité de commande d'adaptation (60) comprend :

- une entrée (96) de fourniture d'une vitesse observée (v) du train,
- un premier estimateur statistique d'un premier paramètre de convergence (C1) représentatif de la performance d'arrêt fonction de la décélération observée et de la consigne de décélération,
- un deuxième estimateur statistique d'un deuxième paramètre de convergence (C2) représentatif de la performance d'arrêt fonction de la vitesse ($v_{\varphi 3}$) observée, de la décélération observée et de la consigne de décélération.

**13.** Dispositif de commande régulée selon l'une quelconque des revendications 1 à 12, **caractérisé ce que** l'unité de commande d'adaptation (60) comprend
une première sortie (98) apte à délivrer une commande de biais de régulation de la commande (K),
une deuxième sortie (102) apte à délivrer une commande d'ajustement du retard de réponse dynamique (τ).

**14.** Dispositif de commande régulée la revendication 13 **caractérisé ce que**
la première sortie (98) de l'unité de commande d'adaptation (60) est connectée à l'entrée (100) de l'unité de régulation (56), et
la deuxième sortie (102) de l'unité de commande d'adaptation (60) est connectée à l'entrée (104) de l'unité de modélisation (52) pour lui fournir une commande d'ajustement de retard (τ).

**15.** Dispositif de commande régulée selon l'une quelconque des revendications 1 à 14 **caractérisé en ce qu'**il comprend :

une entrée (48) d'enclenchement / déclenchement du dispositif de commande d'arrêt, et
des moyens d'enclenchement / déclenchement (61) de la mise en fonctionnement du dispositif de commande d'arrêt.

**16.** Dispositif de commande régulée de précision selon la revendication 15, **caractérisé en ce que** le dispositif de d'enclenchement / déclenchement (61) comprend:

une entrée de commande (64) apte à recevoir une entrée de commande de déclenchement de mode d'arrêt précis de tir au but,
un commutateur à deux entrées (66, 68) et une sortie simple (62), la sortie (62) étant connectée directement à l'entrée (40) du véhicule (4),
et **en ce que** la connexion d'une entrée (66, 68) à la sortie (62) dépend du signal de commande d'enclenchement / déclenchement fournie en entrée de commande (64).

**17.** Procédé de commande régulée d'arrêt de précision de véhicule mis en oeuvre par un dispositif de commande régulée (10) défini par une fonction de transfert ayant au moins un paramètre interne (K, τ),
comprenant les étapes consistant à :

- recevoir, en une entrée (42) de consigne, une consigne prédéterminée de commande non régulée de véhicule (4),
- recevoir en une entrée (44, 46) cinématique observée une grandeur cinématique observée du véhicule (4),
- fournir en une sortie (40) de commande régulée, un signal de commande réglée au véhicule (4),

**caractérisé en ce qu'**il comprend en outre une étape consistant à

- commander l'adaptation d'au moins un paramètre interne (K, τ) en fonction de l'entrée de consigne (42) et de l'entrée cinématique (44, 46) observée.

**18.** Procédé de commande régulée selon la revendication 17, **caractérisé en ce qu'**il comprend les étapes consistant à :

- modéliser et calculer une réponse dynamique de véhicule (4) à une consigne de commande du véhicule sous la forme d'une grandeur cinématique attendue,
- comparer la grandeur cinématique attendue à la grandeur de décélération observée,
- réguler la consigne de commande par la fourniture d'un signal de rétroaction formant une correction de l'écart existant entre la grandeur cinématique attendue et la grandeur cinématique observée,
- effectuer la combinaison de la consigne et du signal rétroactif de correction pour déterminer une commande régulée.

**19.** Procédé de commande régulée selon l'une quelconque des revendications 17 à 18 **caractérisé en ce que** l'étape de commande d'adaptation comprend les étapes consistant à :

- recevoir en une première entrée (94) la consignes commande,
- recevoir en une deuxième entrée (91) la grandeur cinématique observée,
- estimer le temps de réponse dynamique en comparant la variation temporelle de la grandeur cinématique attendue à la grandeur cinématique observée,
- estimer par une statistique un paramètre de convergence (C1, C2) représentatif de la précision d'arrêt en fonction de la grandeur cinématique observée et de la consigne de commande.

**20.** Procédé de commande régulée selon l'une quelconque des revendications 17 à 19 **caractérisé en ce que** l'étape de commande d'adaptation comprend l'étape consistant à :

- recevoir une composante de régulation de type intégral fournie à l'étape de régulation,

et **en ce que**
l'estimation d'un critère de convergence est fondée sur la composante de régulation de type intégral fournie.

**21.** Procédé de commande d'arrêt selon l'une quelconque des revendications 17 à 20 **caractérisé en ce que** l'étape de commande d'adaptation comprend en outre les étapes consistant à :

identifier par un procédé de classification (120) une classe de freinage de train (4) fonction, d'une part, de l'écart du temps de réponse observé (T) et du temps prédit (D) de l'effet de la consigne envoyée au véhicule (4) au travers du dispositif de commande (10) et d'autre part d'au moins un paramètre de convergence (C1, C2) représentatif d'un arrêt,
affecter (122) des commandes d'adaptation (K, $\tau$) fonction de la classe de freinage du train (4).

**22.** Procédé de commande régulée selon l'une quelconque des revendications 19 à 21 **caractérisé en ce que** l'étape de commande d'adaptation comprend en outre l'étape consistant à :

- recevoir en une entrée (96) une vitesse observée du véhicule,

et l'étape d'estimation comprend

- une première étape d'estimation consistant à déterminer, par une première statistique, un premier paramètre de convergence (C1) représentatif de la performance du réglage, fonction de la décélération observée du train et de la consigne de décélération,
- une deuxième étape d'estimation par une deuxième statistique un deuxième paramètre de convergence (C2) représentatif de la performance de réglage, fonction de la vitesse ($v_{\varphi3}$) observée, de la décélération observée et de la consigne de décélération.

**23.** Procédé de commande régulée selon l'une quelconque des revendications 17 à 22 **caractérisé en ce que** l'étape de commande d'adaptation comprend en outre les étapes consistant à :

délivrer en une première sortie (96) une commande de biais de régulation (K) de la commande régulée,
délivrer en une deuxième sortie (102) une commande d'ajustement de retard ($\tau$).

**24.** Procédé de commande d'arrêt selon la revendication 23, **caractérisé en ce que :**

la commande d'ajustement de retard ($\tau$) est fournie à l'unité de modélisation (52) de la réponse dynamique du véhicule (4).

**25.** Procédé de commande régulée selon l'une des revendications 19 à 24 **caractérisé en ce que** l'étape de commande d'adaptation comprend en outre l'étape consistant à :

fournir un message d'avertissement du caractère hors gabarit d'un train en cas d'échec de la convergence des critères de convergence et/ou d'alignement du temps de réponse la prise d'effet de la consigne de décélération après un nombre d'arrêts prédéterminé.

**26.** Procédé de commande d'arrêt selon l'une quelconque des revendications 17 à 25 **caractérisé en ce qu'**il comprend en outre une étape consistant à :

enclencher / déclencher le dispositif de commande régulée .

**27.** Véhicule (4) avec un moteur de traction et un frein comportant un dispositif de commande régulée (10) d'arrêt de précision selon l'une quelconque de revendications 1 à 16 pour commander l'action du moteur et/ou du frein.

**Claims**

**1.** Regulated-control device (10) for precision-stopping of a vehicle (4) with autopilot control comprising:

an observed kinematic input (44, 46) capable of receiving at least one observed kinematic variable from the vehicle (4),
a predetermined setpoint input (42) capable of receiving an unregulated-control setpoint signal,
a regulated-control output (40) capable of supplying at least one regulated dynamic control value to the vehicle (4), depending on the observed kinematic input (44, 46) and the setpoint input (42) according to a predetermined characteristic transfer function of the device (10), the transfer function comprising at least one internal parameter $(K, \tau)$,
**characterised in that** the device (10) comprises an adaptation control unit (60) capable of modifying at least one internal parameter $(K, \tau)$ by means of an adaptation control, the adaptation control being dependent on the observed kinematic input (44, 46) and the setpoint input (42).

**2.** Regulated-control device (10) according to claim 1, **characterised in that** it comprises two modifiable internal parameters $(K, \tau)$, the first parameter $(\tau)$ being a dynamic response delay associated with the vehicle and the second parameter $(K)$ being a dynamic regulation bias control.

**3.** Regulated-control device (10) according to either claim 1 or claim 2, **characterised in that**
the adaptation control is dependent on a difference between, on the one hand, the observed kinematic input (44, 46) and, on the other hand, an expected kinematic value, determined from a predetermined dynamic response model (52) associated with the vehicle (4) and from the setpoint input (42).

**4.** Regulated-control device (10) according to claim 3, **characterised in that** the adaptation control $(K, \tau)$ also depends on at least one convergence parameter $(C_1, C_2)$ which is dependent on a regulation control $(Reg_{int})$.

**5.** Regulated-control device (10) according to claim 4, **characterised in that** the control function $(K, \tau)$ is separated into categories defined according to the difference between the observed kinematic input (44, 46) and the expected kinematic value, and the at least one convergence parameter $(C_1, C_2)$.

**6.** Regulated-control device according to any one of claims 1 to 5, **characterised in that:**

- the setpoint input is an input (42) for receiving a deceleration setpoint from the vehicle (4),
- the observed kinematic input comprises an input (44) for receiving an observed velocity and an input (46) for receiving an observed deceleration,
- the regulated-control output is an output (40) for supplying a deceleration regulated-control signal from the vehicle (4),

and **in that** it comprises a set of component units of the transfer function (52, 56, 58, 61) of the device (10).

**7.** Regulated-control device (10) according to claim 6, **characterised in that** it comprises:

- a modelling unit (52) representing an expected dynamic response from the vehicle (10) to the deceleration setpoint and allowing the expected deceleration of the vehicle (4) to be determined as an expected kinematic value,
- a unit (54) for comparing the expected deceleration signal with the observed deceleration signal,
- a regulation unit (56) for providing a feedback control signal for correcting the difference between the expected deceleration and the observed deceleration,
- a synthesis unit (58) for determining a regulated-control signal as a function of the setpoint signal and the feedback correction signal.

8. Regulated-control device (10) according to either claim 6 or claim 7, **characterised in that** the adaptation control unit (60) comprises:

- a first input (94) of an adaptation control unit (60) for receiving the deceleration setpoint,
- a second adaptation control input (91) for receiving the observed deceleration,
- a response time estimator which compares the time variation curve of the expected deceleration with that of the observed deceleration,
- at least one convergence parameter ($C_1$,$C_2$) statistical estimator representing the stopping precision, which is dependent on the observed deceleration of the vehicle and the train deceleration setpoint.

9. Regulated-control device according to either claim 7 or claim 8, **characterised in that** the regulation unit (56) comprises

- a regulation unit input (80) for receiving the difference between the expected deceleration and the observed deceleration,
- an output (83) for supplying an integral-type regulation component known as an integral control,

and **in that** the adaptation unit (60) comprises a third input (92) connected to the integral control output (83) of the regulation unit (56).

10. Regulated-control device according to either claim 8 or claim 9, **characterised in that** at least one estimator of the adaptation unit (60) is capable of determining a convergence criterion based on the integral regulation control signal supplied at the input (92).

11. Regulated-control device according to any one of claims 1 to 10, **characterised in that** the adaptation control unit (60) is capable of:

identifying, by a classification process (120), a braking category for a vehicle (4) which is dependent, on the one hand, on the difference between an observed response time (T) and a time (D) predicted by the unit (52) for modelling the effect of the setpoint sent to the vehicle (4) and, on the other hand, on at least one convergence parameter ($C_1$,$C_2$), and
allocating adaptation controls (K, $\tau$) as a function of the braking category for the vehicle (4).

12. Regulated-control device according to any one of claims 6 to 11, **characterised in that** the adaptation control unit (60) comprises:

- an input (96) for supplying an observed velocity (v) of the train,
- a first statistical estimator of a first convergence parameter (C1) representing the stopping performance, which is dependent on the observed deceleration and the deceleration setpoint,
- a second statistical estimator of a second convergence parameter (C2) representing the stopping performance, which is dependent on the observed velocity ($v_{\phi3}$), the observed deceleration and the deceleration setpoint.

13. Regulated-control device according to any one of claims 1 to 12, **characterised in that** the adaptation control unit (60) comprises:

a first output (98) capable of issuing a bias control for regulating the control (K), and
a second output (102) capable of issuing a control for adjusting the dynamic response delay ($\tau$).

14. Regulated-control device according to claim 13 **characterised in that**

the first output (98) of the adaptation control unit (60) is connected to the input (100) of the regulation unit (56), and the second output (102) of the adaptation control unit (60) is connected to the input (104) of the modelling unit (52) so as to supply it with a delay adjustment control ($\tau$).

15. Regulated-control device according to any one of claims 1 to 14, **characterised in that** it comprises:

    a triggering/activation input (48) for the stopping control device, and
    triggering/activation means (61) for operating the stopping control device.

16. Precision regulated-control device according to claim 15, **characterised in that** the triggering/activation device (61) comprises:

    a control input (64) capable of receiving an activation control input for the final precision-stopping mode,
    a switch with two inputs (66, 68) and a single output (62), the output (62) being connected directly to the input (40) of the vehicle (4),
    and **in that** the connection of an input (66, 68) to the output (62) depends on the triggering/activation control signal supplied at the control input (64).

17. Regulated-control process for precision-stopping of a vehicle implemented by a regulated-control device (10) defined by a transfer function having at least one internal parameter (K, $\tau$),
    comprising the stages of:

    - receiving, at one setpoint input (42), a predetermined unregulated-control setpoint for the vehicle (4),
    - receiving, at an observed kinematic input (44, 46), an observed kinematic value from the vehicle (4),
    - supplying, at one regulated-control output (40), an adjusted-control signal to the vehicle (4),

    **characterised in that** it also comprises a stage of

    - controlling the adaptation of at least one internal parameter (K, $\tau$) as a function of the setpoint input (42) and the observed kinematic input (44, 46).

18. Regulated-control process according to claim 17, **characterised in that** it comprises the stages of:

    - modelling and calculating a dynamic response of the vehicle (4) to a vehicle control setpoint in the form of an expected kinematic value,
    - comparing the expected kinematic value with the observed deceleration value,
    - regulating the control setpoint by supplying a feedback signal to correct the difference between the expected kinematic value and the observed kinematic value,
    - combining the setpoint and the feedback correction signal to determine a regulated control.

19. Regulated-control process according to either claim 17 or claim 18, **characterised in that** the adaptation control stage comprises the stages of:

    - receiving the control setpoint at a first input (94),
    - receiving the observed kinematic value at a second input (91),
    - estimating the dynamic response time by comparing the time variation of the expected kinematic value with the observed kinematic value,
    - estimating, by a statistic, a convergence parameter (C1, C2) representing the stopping precision as a function of the observed kinematic value and the control setpoint.

20. Regulated-control process according to any one of claims 17 to 19, **characterised in that** the adaptation control stage comprises the stage of:

    - receiving an integral-type regulation component supplied at the regulation stage, and **in that**
    - the estimation of a convergence criterion is based on the integral-type regulation component supplied.

21. Stopping control process according to any one of claims 17 to 20, **characterised in that** the adaptation control stage also comprises the stages of:

identifying, by a classification process (120), a braking category for a train (4) which is dependent, on the one hand, on the difference between the observed response time (T) and the predicted time (D) of effect of the setpoint sent to the vehicle (4) via the control device (10) and, on the other hand, on at least one convergence parameter (C1, C2) representing a stop, and

allocating (122) adaptation controls (K, τ) which are dependent on the braking category of the train (4).

**22.** Regulated-control process according to any one of claims 19 to 21, **characterised in that** the adaptation control stage also comprises the stage of:

- receiving an observed velocity of the vehicle at an input (96),

and the estimation stage comprises

- a first estimation stage consisting of determining, by a first statistic, a first convergence parameter (C1) representing the adjustment performance, which is dependent on the observed deceleration of the train and the deceleration setpoint,
- a second stage of estimating, by a second statistic, a second convergence parameter (C2) representing the adjustment performance, which is dependent on the observed velocity ($v_{\phi 3}$), the observed deceleration and the deceleration setpoint.

**23.** Regulated-control process according to any one of claims 17 to 22, **characterised in that** the adaptation control stage also comprises the stages of:

issuing at a first output (96) a bias control for regulating (K) the regulated control, and
issuing at a second output (102) a delay adjustment control (τ).

**24.** Stopping control process according to claim 23, **characterised in that:**

the delay adjustment control (τ) is supplied to the unit (52) for modelling the dynamic response of the vehicle (4).

**25.** Regulated-control process according to any one of claims 19 to 24, **characterised in that** the adaptation control stage also comprises the stage of:

supplying an outside-limits train warning message if the convergence criteria fail to converge and/or the response time fails to align with enforcement of the deceleration setpoint after a predetermined number of stops.

**26.** Stopping control process according to any one of claims 17 to 25, **characterised in that** it also comprises the stage of:

triggering/activating the regulated-control device.

**27.** Vehicle (4) with a traction engine and a brake comprising a regulated-control device (10) for precision-stopping according to any one of claims 1 to 16 so as to control the action of the engine and/or the brake.

**Patentansprüche**

**1.** Vorrichtung mit geregeltem Befehl (10) für ein Präzisionsanhalten, bestimmt für ein Fahrzeug (4) mit Autopilot, aufweisend:

einen beobachteten kinematischen Eingang (44, 46), eingerichtet für den Erhalt wenigstens einer beobachteten kinematischen Variablen des Fahrzeuges (4),
einen Eingang (42) für einen bestimmten Einstellwert, eingerichtet für den Erhalt eines Einstellwertsignals ungeregelten Befehls,
einen Ausgang (40) für einen geregelten Befehl, eingerichtet zur Lieferung wenigstens einer geregelten dynamischen Befehlsgröße an das Fahrzeug (4) in Abhängigkeit von dem beobachteten kinematischen Eingang (44, 46) und dem Einstellwerteingang (42) gemäß einer bestimmten charakteristischen Transferfunktion der Vorrichtung (10), wobei die Transferfunktion wenigstens einen inneren Parameter (K, τ) aufweist, **dadurch gekennzeichnet, dass** die Vorrichtung (10) eine Adaptionsbefehlseinheit (60), eingerichtet zur Modifikation wenigstens eines inneren Parameters (K, τ) durch einen Adaptionsbefehl abhängig von dem beobachteten kinematischen Eingang (44, 46) und dem Einstellwerteingang (42) aufweist.

2. Vorrichtung mit geregeltem Befehl (10) nach Anspruch 1, **dadurch gekennzeichnet, dass** sie zwei modifizierbare innere Parameter (K, τ) aufweist, wobei der erste Parameter (τ) eine dem Fahrzeug zugeordnete dynamische Ansprechverzögerung und der zweite Parameter (K) ein Bias-Befehl für die dynamische Regelung ist.

3. Vorrichtung mit geregeltem Befehl (10) nach einem der Ansprüche 1 bis 2, **dadurch gekennzeichnet, dass** der Adaptionsbefehl eine Funktion des Unterschieds zwischen einerseits dem beobachteten kinematischen Eingang (44, 46) und einer erwarteten kinematischen Größe andererseits ist, die anhand eines bestimmten dem Fahrzeug (4) zugeordneten dynamischen Ansprechmodells (52) und anhand des Einstellwerteingangs (42) bestimmt ist.

4. Vorrichtung mit geregeltem Befehl (10) nach Anspruch 3, **dadurch gekennzeichnet, dass** der Adaptionsbefehl (K, τ) ferner von wenigstens einem Konvergenzparameter ($C_1$, $C_2$) abhängt, der eine Funktion eines Regelbefehls ($Reg_{int}$) ist.

5. Vorrichtung mit geregeltem Befehl (10) nach Anspruch 4, **dadurch gekennzeichnet, dass** die Steuerfunktion (K, τ) in Klassen unterteilt ist, die in Abhängigkeit vom Unterschied zwischen dem beobachteten kinematischen Eingang (44, 46) und der erwarteten kinematischen Größe und von wenigstens einem Konvergenzparameter ($C_1$, $C_2$) definiert sind.

6. Vorrichtung mit geregeltem Befehl nach einem der Ansprüche 1 bis 5, **dadurch gekennzeichnet, dass:**

   - der Einstellwerteingang ein Eingang (42) für den Erhalt eines Verzögerungswerts des Fahrzeugs (4) ist,
   - der beobachtete kinematische Eingang einen Eingang (44) für den Erhalt einer beobachteten Geschwindigkeit und einen Eingang (46) für den Erhalt einer beobachteten Verzögerung umfasst,
   - der Ausgang für den geregelten Befehl ein Ausgang zur Lieferung eines Geregeltbefehlsignals für die Verzögerung des Fahrzeugs (4) ist,

   und dass sie einen Aufbau aus Komponenteneinheiten (52, 56, 58, 61) der Transferfunktion der Vorrichtung (10) aufweist.

7. Vorrichtung mit geregeltem Befehl (10) nach Anspruch 6, **dadurch gekennzeichnet, dass** sie aufweist:

   - eine Modellierungseinheit (52), welche eine erwartete dynamische Antwort des Fahrzeugs (10) auf den Verzögerungswert darstellt und gestattet, die erwartete Verzögerung des Fahrzeugs (4) als erwartete kinematische Größe zu bestimmen,
   - eine Vergleichseinheit (54) zum Vergleichen des erwarteten Verzögerungssignals und des beobachteten Verzögerungssignals,
   - eine Regelungseinheit (56), die es gestattet, ein rückgekoppeltes Befehlssignal zur Korrektur des Unterschieds, der zwischen der erwarteten Verzögerung und der beobachteten Verzögerung besteht, zu liefern,
   - eine Syntheseeinheit (58) zur Bestimmung eines Geregeltbefehlssignals in Abhängigkeit vom Einstellwertsignal und vom rückgekoppelten Korrektursignal.

8. Vorrichtung mit geregeltem Befehl (10) nach einem der Ansprüche 5 bis 7, **dadurch gekennzeichnet, dass** die Adaptionsbefehlseinheit (60) aufweist:

   - einen ersten Eingang (94) der Adaptionsbefehlseinheit (60), der für den Erhalt des Verzögerungswerts bestimmt ist,
   - einen zweiten Eingang (91) für den Adaptionsbefehl, der für den Erhalt der beobachteten Verzögerung bestimmt ist,
   - einen Schätzer für die Antwortzeit unter Vergleich der beobachteten zeitlichen Variationskurve der erwarteten Verzögerung mit der beobachteten Verzögerung,
   - wenigstens einen statistischen Schätzer für den Konvergenzparameter (C1, C2), der für die Präzision des Anhaltens repräsentativ ist, in Abhängigkeit von der beobachteten Verzögerung des Fahrzeugs und dem Verzögerungseinstellwert des Zuges.

9. Vorrichtung mit geregeltem Befehl nach einem der Ansprüche 7 bis 8, **dadurch gekennzeichnet, dass** die Regelungseinheit (56) aufweist:

- einen Eingang (80) der Regelungseinheit, der für den Erhalt des Unterschieds, der zwischen der erwarteten Verzögerung und der beobachteten Verzögerung besteht, bestimmt ist,
- einen Ausgang (83) zur Lieferung einer Regelungskomponente vom Typ integral, genannt Integralbefehl,

und dass die Adaptionseinheit (60) einen dritten Eingang (92) aufweist, der mit dem Integralbefehlsausgang (83) der Regelungseinheit (56) verbunden ist.

**10.** Vorrichtung mit geregeltem Befehl nach einem der Ansprüche 8 bis 9, **dadurch gekennzeichnet, dass** wenigstens ein Schätzer der Adaptionseinheit (60) eingerichtet ist, ein Konvergenzkriterium basierend auf dem am Eingang (92) gelieferten Integralregelbefehlssignal zu bestimmen.

**11.** Vorrichtung mit geregeltem Befehl nach einem der Ansprüche 1 bis 10, **dadurch gekennzeichnet, dass** die Adaptionsbefehlseinheit (60) eingerichtet ist,
über ein Klassifizierungsverfahren (120) eine Bremsklasse des Fahrzeugs (4) in Abhängigkeit von einerseits dem Unterschied zwischen einer beobachteten Antwortzeit (T) und einer von der Modellierungseinheit (52) für den Effekt des an das Fahrzeug (4) gesendeten Einstellwerts vorhergesagten Zeit (D) und von andererseits wenigstens einem Konvergenzparameter (C1, C2) zu identifizieren,
Adaptionsbefehle (K, τ) in Abhängigkeit von der Bremsklasse des Fahrzeugs (4) zu beeinflussen.

**12.** Vorrichtung mit geregeltem Befehl nach einem der Ansprüche 6 bis 11, **dadurch gekennzeichnet, dass** die Adaptionsbefehlseinheit (60) aufweist:

- einen Eingang (96) zur Lieferung einer beobachteten Geschwindigkeit (v) des Zugs,
- einen ersten statistischen Schätzer für einen ersten Konvergenzparameter (C1), der für das Anhalteverhalten repräsentativ ist, in Abhängigkeit von der beobachteten Verzögerung und dem Verzögerungseinstellwert,
- einen zweiten statistischen Schätzer eines zweiten Konvergenzparameters (C2), der für das Anhalteverhalten repräsentativ ist, in Abhängigkeit von der beobachteten Geschwindigkeit ($v_{\varphi 3}$), der beobachteten Verzögerung und dem Verzögerungseinstellwert.

**13.** Vorrichtung mit geregeltem Befehl nach einem der Ansprüche 1 bis 12, **dadurch gekennzeichnet, dass** die Adaptionsbefehlseinheit (60) aufweist:

einen ersten Ausgang (98), der für eine Lieferung eines Bias-Befehls für die Regelung des Befehls (K) eingerichtet ist,
einen zweiten Ausgang (102), der für die Lieferung eines Einstellbefehls der dynamischen Antwortverzögerung (τ) eingerichtet ist.

**14.** Vorrichtung mit geregeltem Befehl gemäß Anspruch 13, **dadurch gekennzeichnet, dass**
der erste Ausgang (98) der Adaptionsbefehlseinheit (60) mit dem Eingang (100) der Regelungseinheit (56) verbunden ist, und
der zweite Ausgang (102) der Adaptionsbefehlseinheit (60) mit dem Eingang (104) der Modellierungseinheit (52) zur Lieferung eines Verzögerungseinstellbefehls (τ) verbunden ist.

**15.** Vorrichtung mit geregeltem Befehl nach einem der Ansprüche 1 bis 14, **dadurch gekennzeichnet, dass** sie aufweist:

einen Einkoppel/Auskoppeleingang (48) der Anhaltebefehlsvorrichtung, und
Einkoppel/Auskoppel-Mittel (61) zum Inbetriebsetzen der Anhaltebefehlsvorrichtung.

**16.** Präzisionsvorrichtung mit geregeltem Befehl nach Anspruch 15, **dadurch gekennzeichnet, dass** die Einkoppel/ Auskoppelvorrichtung (61) aufweist:

einen Befehlseingang (64), der für den Erhalt einer Eingabe eines Auskoppelbefehls für den "Schuss aufs Ziel"-Präzisionsanhaltemodus eingerichtet ist,
einen Umschalter mit zwei Eingängen (66, 68) und einem einfachen Ausgang (62), wobei der Ausgang (62) direkt mit dem Eingang (40) des Fahrzeugs (4) verbunden ist,
und dass die Verbindung des einen Eingangs (66, 68) mit dem Ausgang (62) von dem am Befehlseingang (64) gelieferten Auskoppel/Einkoppel-Befehlssignal abhängt.

17. Verfahren mit geregeltem Befehl zum Präzisionsanhalten eines Fahrzeugs, durchgeführt mit einer Vorrichtung mit geregeltem Befehl (10), die durch eine Transferfunktion mit wenigstens einem inneren Parameter (K, $\tau$) definiert ist, wobei das Verfahren folgende Verfahrensschritte aufweist:

- Erhalten, an einem Einstellwerteingang (42), eines bestimmten nicht geregelten Befehls für ein Fahrzeug (4),
- Erhalten, an einem beobachteten kinematischen Eingang (44, 46), einer beobachten kinematischen Größe des Fahrzeugs (4),
- Liefern, an einem Ausgang (40) für einen geregelten Befehl, eines Geregeltbefehlsignals an das Fahrzeug (4),

**dadurch gekennzeichnet, dass** es ferner einen Verfahrensschritt aufweist, der

- in einem Befehlen der Adaption wenigstens eines inneren Parameters (K, $\tau$) in Abhängigkeit vom Einstellwerteingang (42) und vom beobachteten kinematischen Eingang (44, 46) besteht.

18. Verfahren mit geregeltem Befehl nach Anspruch 17, **dadurch gekennzeichnet, dass** es folgende Verfahrensschritte aufweist:

- Modellieren und Berechnen einer dynamischen Antwort des Fahrzeugs (4) auf einen Befehlseinstellwert des Fahrzeugs in Form einer erwarteten kinematischen Größe,
- Vergleichen der erwarteten kinematischen Größe mit der beobachteten Verzögerungsgröße,
- Regeln des Befehlseinstellwerts durch das Liefern eines Rückkopplungssignals, das eine Korrektur des Unterschieds bildet, der zwischen der erwarteten kinematischen Größe und der beobachteten kinematischen Größe besteht,
- Bewirken der Kombination des Einstellwerts und des retroaktiven Korrektursignals zur Bestimmung eines geregelten Befehls.

19. Verfahren mit geregeltem Befehl nach einem der Ansprüche 17 bis 18, **dadurch gekennzeichnet, dass** der Schritt des Adaptionsbefehls folgende Schritte umfasst:

- Erhalten, an einem ersten Eingang (94), des Befehlseinstellwerts,
- Erhalten, an einem zweiten Eingang (91), der beobachteten kinematischen Größe,
- Abschätzen der dynamischen Antwortzeit unter Vergleichen der zeitlichen Änderung der erwarteten kinematischen Größe mit der beobachteten kinematischen Größe,
- Abschätzen, mit einer Statistik, eines Konvergenzparameters (C1, C2), der für das Präzisionsanhalten repräsentativ ist, in Abhängigkeit von der beobachteten kinematischen Größe und dem Befehlseinstellwert.

20. Verfahren mit geregeltem Befehl nach einem der Ansprüche 17 bis 19, **dadurch gekennzeichnet, dass** der Adaptionsbefehlsschritt folgenden Schritt aufweist:

- Erhalten einer Regelungskomponente vom Typ integral, die im Regelungsschritt geliefert worden ist,

und dass

- die Abschätzung eines Konvergenzkriteriums auf der gelieferten Regelungskomponente vom Typ integral basiert wird.

21. Verfahren mit geregeltem Befehl nach einem der Ansprüche 17 bis 20, **dadurch gekennzeichnet, dass** der Adaptionsbefehlsschritt ferner folgende Schritte aufweist:

Identifizieren, über ein Klassifizierungsverfahren (120), einer Bremsklasse des Zugs (4) in Abhängigkeit einerseits vom Unterschied zwischen der beobachteten Antwortzeit (T) und der für den Effekt des über die Befehlsvorrichtung (10) an das Fahrzeug gesendeten Einstellwerts vorhergesagter Zeit (D) und andererseits von wenigstens einem Konvergenzparameter (C1, C2), der für ein Anhalten repräsentativ ist,
Beeinflussen (122) der Adaptionsbefehle (K, $\tau$) in Abhängigkeit von der Bremsklasse des Zugs (4).

22. Verfahren mit geregeltem Befehl nach einem der Ansprüche 19 bis 21, **dadurch gekennzeichnet, dass** der Adaptionsbefehlsschritt ferner folgenden Schritt aufweist:

- Erhalten, an einem Eingang (96), einer beobachteten Geschwindigkeit des Fahrzeugs,

und der Abschätzschritt aufweist:

- einen ersten Abschätzschritt, der in einem Bestimmen, durch eine erste Statistik, eines ersten Konvergenzparameters (C1), der für das Regelungsverhalten repräsentativ ist, in Abhängigkeit von der beobachteten Verzögerung des Zuges und dem Verzögerungseinstellwert besteht,
- einen zweiten Abschätzschritt der Abschätzung, durch eine zweite Statistik, eines zweiten Konvergenzparameters (C2), der für das Regelungsverhalten repräsentativ ist, in Abhängigkeit von der beobachteten Geschwindigkeit ($v_{\varphi3}$), der beobachteten Verzögerung und dem Verzögerungseinstellwert.

**23.** Verfahren mit geregeltem Befehl nach einem der Ansprüche 17 bis 22, **dadurch gekennzeichnet, dass** der Adaptionsbefehlsschritt ferner folgende Schritte aufweist:

- Liefern, an einem ersten Ausgang (96), eines Bias-Befehls für die Regelung (K) des geregelten Befehls,
- Liefern, an einem zweiten Ausgang (102), eines Verzögerungseinstellbefehls ($\tau$).

**24.** Verfahren mit geregeltem Befehl nach Anspruch 23, **dadurch gekennzeichnet, dass** der Verzögerungseinstellbefehl ($\tau$) an die Modellierungseinheit (52) für die dynamische Antwort des Fahrzeugs (4) geliefert wird.

**25.** Verfahren mit geregeltem Befehl nach einem der Ansprüche 19 bis 24, **dadurch gekennzeichnet, dass** der Adaptionsbefehlsschritt ferner folgenden Schritt aufweist:

Liefern einer Warnnachricht für eine Größe außerhalb des Modells eines Zuges im Fall eines Abbruchs der Konvergenz der Konvergenzkriterien und/oder der Annäherung der Ansprechzeit der Wirkungsaufnahme des Verzögerungseinstellwerts nach einer bestimmten Anzahl von Halten.

**26.** Verfahren mit geregeltem Befehl nach einem der Ansprüche 17 bis 25, **dadurch gekennzeichnet, dass** es ferner folgenden Verfahrensschritt aufweist:

Einkoppeln/Auskoppeln der Vorrichtung mit geregeltem Befehl.

**27.** Fahrzeug (4) mit einem Antriebsmotor und einer Bremse, welches eine Vorrichtung mit geregeltem Befehl (10) zum Präzisionsanhalten nach einem der Ansprüche 1 bis 16 zum Steuern der Tätigkeit des Motors und/oder der Bremse aufweist.

FIG.1

Décélération attendue

Vitesse Palier

Distance

50

| 1 | 2 | 3 | 4 | 5 |

FIG.2

23

FIG.3

108 — i=1

110 — Calcul et mémorisation avec Q fixé de

$$C_1^i(Q) = \frac{\sum\limits_{k=1}^{N} Reg_{int}(k)}{N}$$

$$C_2^i(Q) = \upsilon_{\varphi 3} \sum\limits_{k=1}^{N} Reg_{int}(k)$$

112 — Identification retard global $T^i(Q)$

114 — i=x

non

116 — i --> i+1

oui

118 — Calcul des critères moyens :

$$C_1(Q) = \sum\limits_{i=1}^{x} C_1^i(Q)/X$$

$$C_2(Q) = \sum\limits_{i=1}^{x} C_2^i(Q)/X$$

moyenne T(Q)

120 — Identification d'une classe de freinage en fonction des critères moyens $C_1(Q)$, $C_2(Q)$ et $T(Q)$ sur la base d'un procédé de classification

122 — Détermination des commandes d'adaptation en fonction de la classe d'appartenance sur la base d'un tableau de correspondance

124 — Fin

FIG.4

Décélération
réalisée

0 m.s⁻²

10% Actrain

Décélération réalisée

Écart plateau de décélération

Décélération cible

temps

126    128

Retard d+d '

## FIG.5

Décélération
réalisée

0 m.s⁻²

10% Actrain

Décélération cible
en Tir au But

Écart plateau de décélération

Décélération réalisée

temps

126    128

Retard d+d '

## FIG.6

$$T_{modele} = T_{identifié}$$

Classe 1     Classe 2     Classe 1

$-\varepsilon$    $0$    $+\varepsilon$       $C_1$

## FIG.7

$$T_{modele} \neq T_{identifié}$$

Classe 8    Classe 5

Classe 9    Classe 6    Classe 3

           Classe 7    Classe 4

$-\varepsilon$      $+\varepsilon$       $C_1$

Classe 9   Classe 8   Classe 7    Classe 6    Classe 5   Classe 4   Classe 3

$\eta 3$    $\eta 2$    $-\eta 1$    $0$    $+\eta 1$    $+\eta 2$    $+\eta 3$     $C_2$

## FIG.8

$-K3$    $-K2$    $-K1$         $+K1$    $+K2$    $+K3$

$-\lambda 3$    $-\lambda 2$    $-\lambda 1$    $0$    $+\lambda 1$    $+\lambda 2$    $+\lambda 3$     $C1$

## FIG.10

FIG.9

Précision d'arrêts (mètre)

FIG.11

FIG.12

**EP 1 892 170 B1**